# EUROPEAN PATENT SPECIFICATION

(11) **EP 3 465 178 B1**
(45) Date of publication and mention of the grant of the patent: **08.04.2020**
(21) Application number: 17735624.3
(22) Date of filing: 17.05.2017
(51) Int. Cl.: G01N 23/083, A24C 5/34

(54) **APPARATUS FOR IDENTIFICATION OF PHYSICAL PARAMETERS OF ROD-LIKE ARTICLES OF THE TOBACCO INDUSTRY**
VORRICHTUNG ZUR IDENTIFIZIERUNG VON PHYSIKALISCHEN PARAMETERN VON STABFÖRMIGEN ARTIKELN DER TABAKVERARBEITENDEN INDUSTRIE
APPAREIL D'IDENTIFICATION DE PARAMÈTRES PHYSIQUES D'ARTICLES EN FORME DE BÂTONNET DANS L'INDUSTRIE DU TABAC

(30) Priority: 03.06.2016 PL 41739116
(43) Date of publication of application: 10.04.2019
(73) Proprietor: International Tobacco Machinery Poland SP. Z O.O., 26-600 Radom (PL)
(72) Inventor: CIESLIKOWSKI, Bartosz, 26-600 Radom (PL); DOBROWOLSKI, Jacek, 26-600 Radom (PL)
(74) Representative: Markieta, Jaroslaw Franciszek
(86) International application number: PCT/IB2017/052908
(87) International publication number: WO 2017/208104

(56) References cited:
- EP-A1- 0 766 518
- EP-A1- 2 995 207
- WO-A1-2012/080686
- WO-A2-2015/039851
- US-A- 5 762 075

## Description

The subject of the invention is an apparatus for identification of physical parameters of rod-like articles of the tobacco industry.

Tobacco industry products including cigarettes, cigarillos, cigars, filter rods made of a single filtering material, multi-segment rods comprising multiple segments, and all types of semi-finished products processed at particular stages of production may be referred to by a common name - rod-like articles. Some rod-like articles, such as filter rods and filter cigarettes, may contain capsules with an aromatic substance. In the tobacco industry the quality of rod-like articles is an exceptionally important issue. Quality control may be performed by random selection or may be applied to all articles produced. Quality control concerns both the appearance and the dimensions of the articles, and in the case of articles containing capsules, the level of filling of the capsules is significant. In the case of non-destructive quality control concerning the content of articles, for example the position and the dimensions of segments in multi-segment filter rods or the position of capsules in filter rods or finished cigarettes, it is necessary to image the articles using radiation. Here the radiation sources must be suited to the various materials used by tobacco product manufacturers. The increasing capacities and increasingly complex structure of multi-segment rods result in higher requirements for quality control. The X-radiation enables obtaining an image of the content of articles made practically of any material. However, due to the method of measurement and the image deformation resulting from the perspective from which the images are made the x-ray imaging technology cannot be used for very fast processes. Mathematical calculations related to the image processing require time and efficient computing units. The purpose of this invention is to find an optimal solution combining the process efficiency and the correctness of quality control. For example for multi-segment filter rods the physical parameters which require identification are the length of segments and the position of segments relative to one another along the axis of the rods as well as the position of the capsules in the segments along the axis of the rods and transversely to the axis of the rods. The purpose of measurement is to detect any defects of the rods, for example the spaces among the segments which should touch one other. Another defect is a non-central position of the capsule or an improper position of the capsule along the axis. In the case of filter rods made of a single material the physical parameter which should be detected may be for example an undesired material concentration which, in a finished cigarette with a filter tip, may result in a too big resistance to airflow through the filter tip. In the case of cigarettes it may be necessary to identify the existence of undesired inclusions in the cut tobacco.

The application DE102014209721A1 discloses a method of identifying the parameters of rod-like articles using x-rays wherein the rod-like articles are placed in a rotating clamp. The documents EP0790006B1 and EP2769632A1 disclose a method and an apparatus wherein the parameters of an article, among others the material density, are determined by x-raying the article in different directions. Additional analysis systems for rod-like articles are also known from US 5,762,075 and WO 2015/039851. The use of multilayer and multipath conveyor systems during manufacture of rod-like articles is disclosed in EP 2 995 207.

The object of the invention is an apparatus for identification of physical parameters of rod-like articles of the tobacco industry provided with a multi-path conveyor of rod-like articles; a radiation source arranged for emitting radiation towards the paths of the multi-path conveyor; a radiation sensor arranged so that the it receives the radiation from the radiation source, after the radiation penetrated through the multi-path conveyor of rod-like articles; wherein the radiation source and the radiation sensor are situated on opposite sides of the transferring plane. The apparatus according to the invention is characterised in that the multi-part conveyor of the rod-like articles is a single-layer multi-path conveyor, the radiation source is a single point type radiation source the radiation sensor is positioned transversely to the paths of the conveyor, whereas the radiation sensor is arranged so that it produces a signal representing attenuation of the radiation penetrating through the rod-like articles on the paths of the multi-path conveyor, situated between the radiation source and the radiation sensor. The transverse positioning of the sensor enables including multiple paths in the scope of measurement, which enables increasing the number of simultaneously scanned rod-like articles with the scanning speed remaining unchanged.

The apparatus may optionally be characterised in that the radiation sensor is a linear sensor or a matrix. The introduction of a linear sensor or a matrix enables further increasing of the possibilities of determining the physical parameters using a more detailed graphical analysis of the obtained signal representing attenuation of the radiation penetrating through the articles.

The apparatus may optionally be characterised in that the multi-path conveyor of rod-like articles is arranged so that it enables transferring the groups of rod-like articles in a single plane, parallel to one another. Placing the rod-like articles in a single plane, parallel to one another, makes it easier to produce a signal being easier to process.

The apparatus may optionally be characterised in that the multi-path conveyor of rod-like articles is arranged so that all rod-like articles in a group are aligned to one another. The alignment of the rod-like articles makes it easier to produce a signal being easier to process.

The apparatus may optionally be further characterised in that the radiation sensor is situated beneath the carying surface of the multi-path conveyor.

The apparatus may optionally be further characterised in that the radiation sensor is situated between the multi-path conveyor and a first hopper.

The apparatus may optionally be further characterised by being provided with a rotating unit for simultaneous rotation of rod-like articles in a group at the time of measurement of the parameters of rod-like articles.

The apparatus may optionally be further characterised in that the rotating unit is integrated with the first hopper.

The apparatus may optionally be characterised in that the source of radiation is a source of electromagnetic radiation of a frequency in the range between 10¹² and 10¹⁹ Hz. The use of electromagnetic radiation in this range enables measuring the parameters of rod-like articles containing materials with a high degree of radiation absorption in other frequency ranges.

The apparatus may optionally be characterised in that the source of radiation is arranged so that the intensity of emitted radiation is adjustable to the speed of the multi-path conveyor.

The apparatus may optionally be characterised in that the radiation sensor is arranged so that the exposure time of the radiation sensor depends on the speed of the multi-path conveyor. The adjustment of the radiation intensity and the exposure time relative to the speed of the multi-path conveyor enables obtaining the maximum measuring speed while maintaining the measuring accuracy; a greater intensity enables shortening the required exposure time, which results in an increased speed of the multi-path conveyor.

The apparatus may optionally be characterised by being further provided with a processing station which is adapted to collect the signal delivered from the radiation sensor and produce on its basis an image representing attenuation of the radiation along the length of at least one rod-like article. The processing station enables obtaining an image of susceptibility generated on the basis of a series of linear or matrix measurements. As a result the physical parameters of the rod-like articles may be shown in the graphical form so that the entire group of rod-like articles can be seen in a single image in all analysed paths at full length of the rod-like articles.

An advantage of the apparatus as in the invention is a high certainty of correctness of the results for various materials.

The object of the invention was shown in detail in a preferred embodiment in a drawing in which:
Fig. 1 - shows a perspective view of a fragment of a production line,
Fig. 2, 3, 4 - show a side view of the line of Fig. 1,
Fig. 5 - shows a rotating unit,
Fig. 6 - shows a view of a multi-segment filter rod in a groove of a conveyor,
Fig. 7, 8 - show an image of the rod of Fig. 6.

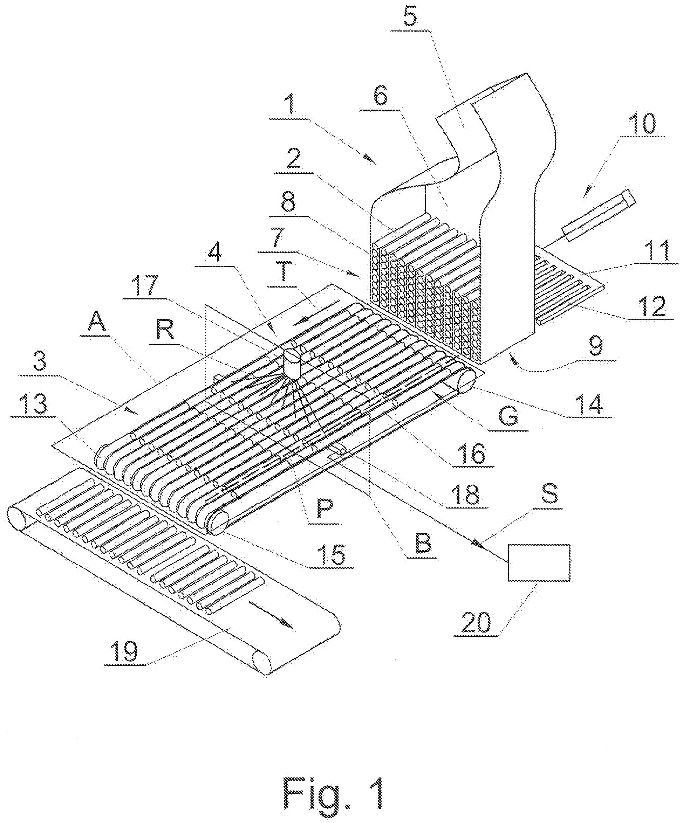

Fig. 1 shows a fragment of a production line comprising a first hopper 1 for rod-like articles 2, a multi-path conveyor 3 of rod-like articles 2 and a measuring unit 4. The first hopper 1, which is a supplying device for the conveyor 3, is fed through a channel 5 (shown in the drawing as not filled with the articles), the upper part of the first hopper 1 constitutes a chamber 6, whereas the bottom part of the first conveyor 1 has the form of multiple channels 8 whose width is slightly greater than the diameter of the rod-like articles 2. The channels 8 are closed from the bottom by a wall 9 on which the rod-like articles 2 are situated. Behind the first hopper 1, at the level of the rod-like articles 2 situated lowest in the channels 8, there is situated a pushing mechanism 10 which makes a reciprocating motion and pushes the group G of rod like articles 2 out of the channels 8, whereas the group G comprises respectively one lowest situated article 2 of each channel 8. The rod-like articles 2 in the group G are aligned after being pushed out of the channels 8, i.e. their ends are arranged in line. A pushing element 11 of the pushing mechanism 10 may have the form of multiple rod-shaped pushers 12 in a number corresponding to the number of the rod-like articles 2 in the group G. The multi-path conveyor 3 has the form of a belt conveyor which comprises a multi-groove belt 13 which is wound round two rollers 14 and 15, whereas the roller 15 is driven by means of a not shown motor. The spaces between the grooves 16 are adapted to the spaces between the channels 8. The grooves 16, which constitute the carrying surface of the multi-path conveyor 3, may for example have the form of the letter V or the form of the letter U. The multi-path conveyor 3 may also be a chain conveyor. The grooves 16 determine the paths of movement for the rod-like articles 2, whereas in Fig. 1 one example path of movement P has been marked, whereas the path of movement P is not limited to the space directly above the carrying surface of the multi-path conveyor 3, but it extends in the direction before and behind the multi-path conveyor 3 considering the direction of movement of the conveyor 3. The paths of movement P of rod-like articles are parallel to one another and lie in the transferring plane A which may be determined on the surface of the multi-groove belt 13. Above the surface of the multi-groove belt 13, i.e. above the transferring plane A, a radiation source 17 is situated, while beneath the surface of the multi-groove belt 13 a radiation sensor 18 is situated. It is possible to make a reverse configuration where the radiation source 17 is situated beneath the transferring plane A, and the radiation sensor 18 above it. The radiation source 17 emits the radiation R which penetrates through the paths P in the transferring plane A and reaches the radiation sensor 18. The radiation sensor 18 may have the form of a strip or a matrix, whereas the matrix may comprise a plurality of individual sensors. The radiation sensor 18 may be arranged to receive the electromagnetic radiation of a frequency in the range between 10¹² and 10¹⁹ Hz. In the embodiment the radiation sensor 18 was shown as a strip arranged to receive the radiation R. The radiation source 17 and the radiation sensor 18 determine a plane B. The plane B as well as the radiation sensor 18 in a top view is situated perpendicular to the direction of movement T of the rod-like articles 2 on the multi-groove belt 13, thus perpendicular to the axis of the articles 2 and to the paths of movement P. The radiation source 17 may be arranged to generate a flat beam referred to as sheet beam, whereas such beam is directed at the radiation sensor 18. It is possible to use such radiation source 17 whose radiation intensity or exposure time will be adjustable to the speed of movement of the rod-like articles. Behind the multi-path conveyor 3 there is situated a conveyor 19 onto which the rod-like articles 2 are supplied from the multi-path conveyor 3. The conveyor 19 conveys the rod-like articles 2 transversely to the axis of these articles and transversely to the direction of movement T of the rod-like articles 2 on the multi-path conveyor 3. In place of the conveyor 19 there may be situated a second hopper or container for rod-like articles 2.

The rod-like articles 2 are fed through the channel 5 in the form of a mass flow to the chamber 6 of the first hopper 1, and then they pass through the channels 8 of the bottom part of the first hopper 1. By means of the pushing mechanism 10 making reciprocating motions the rod-like articles 2 situated lowest in the channels 8 are pushed out as a group G from the channels 8 and are fed to the grooves 16 on the multi-groove belt 13. The rod-like articles 2 move on multiple paths P along the grooves 16 of the conveyor 3. The group G of rod-like articles 2 is conveyed on the belt 13 of the multi-path conveyor 3 in the direction T and passes through the plane B; a measurement is made when the article group G passes through this plane. The radiation R emitted by the radiation source 17 penetrates through the transferred articles 2. The radiation R while penetrating through the rod-like articles 2 is partially absorbed by the material of the articles 2. The radiation R from the radiation source 17 penetrates to a different extent through different materials used in the rod-like articles 2 due to different radiation hardness of such materials. During the movement of the multi-groove belt 13 of the multi-path conveyor 3 the radiation sensor 18 receives the radiation R for successive positions of the rod-like articles 2, i.e. the representations of successive cross-sections of the rod-like article 2 are created in the form of successive lines which represent the attenuation of radiation in successive cross-sections of the rod-like articles 2. In other words, the sensor receives information about the properties of the material in successive cross-sections of the rod-like articles 2. The signals S which contain information about the successive cross-sections are sent to the processing station 20 for successive cross-sections along the length of the rod-like articles. The signals S may be converted to a single line of a created image. The processing station 20, having received successive signals S, makes a compilation of such signals in order to obtain a two-dimensional image of the rod-like articles 2 in the group G. The processing station 20 may prepare an image of the entire group, i.e. all articles in the group G, or separate images of individual articles of the group G, whereas it is possible for a receiver in the form of both a strip and a matrix. Once the measurement has been made, the rod-like articles 2 are transferred from the multi-path conveyor 3 to a receiving device 19. After an analysis of the prepared images any defective rod-like articles 2 may be rejected from the production.

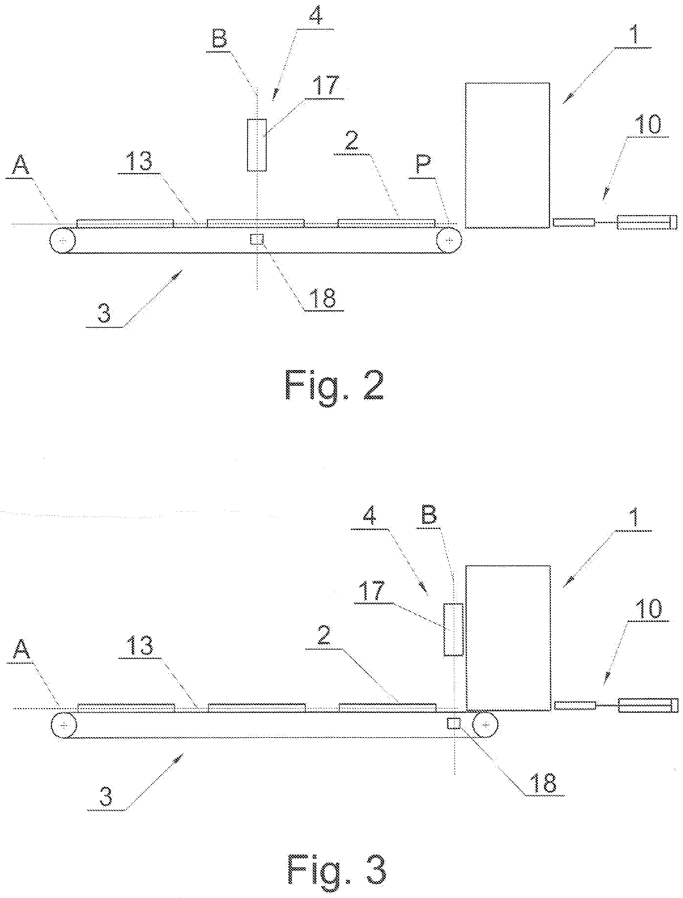

Figs. 2 and 3 show example locations of the measuring unit 4 comprising the radiation source 17 and the radiation sensor 18. The rod-like articles 2 are transferred above the radiation sensor 18 with the travel speed of the multi-groove belt 13. The radiation sensor 18 may be situated at a certain distance from the first hopper 1 (as in Fig. 2) or right next to the first hopper 1 (as in Fig. 3). If the measuring unit 4 is located right next to the first hopper 1 the transfer of the article group G above the radiation sensor 18 may be accomplished simultaneously with pushing out the article group G by the pushing mechanism 10.

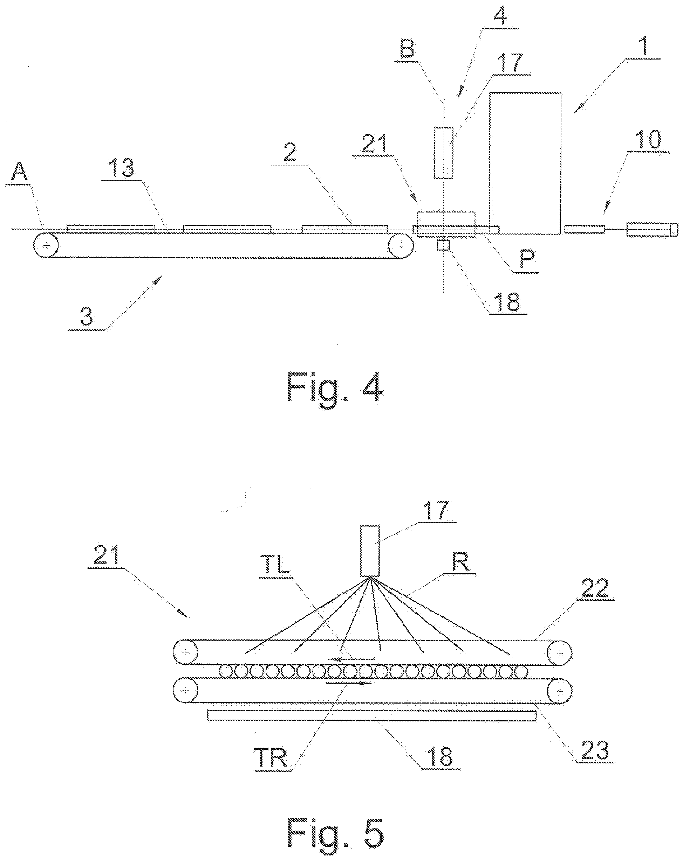

In the embodiment shown in Fig. 4 the multi-path conveyor 3 has been moved away from the first hopper 1. In the space between the multi-path conveyor 3 and the first hopper 1 there is situated a first rotating unit 21 for simultaneous rotation of the rod-like articles 2 pushed out of the first hopper 1 in the form of the group G of rod-like articles 2. At the time of rotation of the rod-like articles 2 the radiation sensor 18 receives the radiation emitted from the radiation source 17, and the images of rod-like articles are generated based on which the position of elements placed in the article may be determined in three dimensions. The elements placed in the rod-like articles 2 comprise capsules with aromatic substances and various inserts made of metal or plastic. The rotating unit 21 may be arranged to rotate the rod-like articles 2 after they have been pushed out by the pushing unit 10 or when the rod-like articles 2 are being pushed out by the pushing unit 10, whereas the rod-shaped pushers 12 of the pushing unit 10 may have the possibility of rotation around the axis of rotation of the rod-like articles 2. The possibility of rotation of the rod-shaped pushers 12 reduces the friction between the rod-like articles 2 and the rod-shaped pushers 12 during the rotation of the rod-like articles 2 by the rotating unit 21.

Fig. 5 shows an embodiment of the rotating unit 21 in the form of two belts 22 and 23 which are put in motion during the rotation of the rod-like articles 2 so that the sections of the belts coming into contact with the rod-like articles 2 move in opposite directions TL and TR.

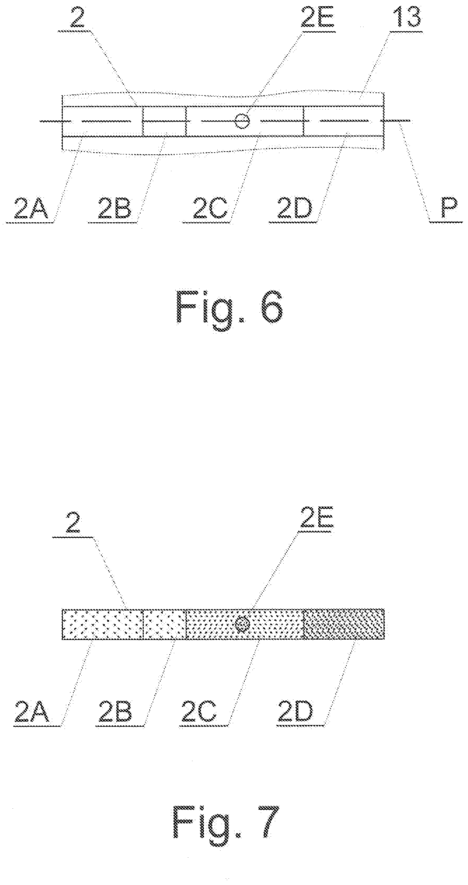

Fig. 6 shows an example of the rod-like article 2 in the form of a multi-segment filter rod situated along the path of movement P on the multi-groove belt 13. The multi-segment filter rod contains components in the form of four segments 2A, 2B, 2C and 2D, whereas a capsule 2E is positioned in the segment 2C (the rod was shown as transparent without any wrapping material).

Fig. 7 shows a two-dimensional image of a multi-segment rod generated after that rod has been x-rayed, whereas the image may be generated on the basis of a measurement made with the aid of the method described above using the radiation sensor in the form of a strip as well as a two-dimensional matrix.

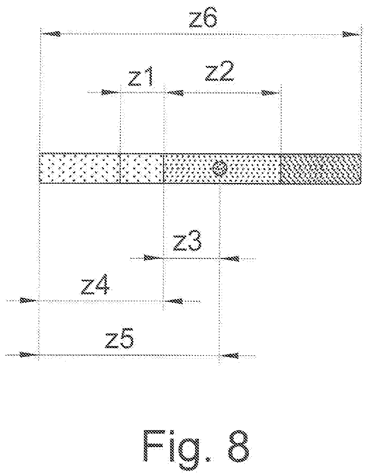

Fig. 8 shows an image of a multi-segment rod subjected to further processing. Example dimensions such as segment lengths z1, z2, z4, full rod length z6 and capsule position defined by the dimension z3 or z5 which may be used in the quality analysis have been marked.

## Claims

1. Apparatus for identification of physical parameters of rod-like articles of the tobacco industry provided with
a multi-path conveyor (3) of rod-like articles (2), fed with rod-like articles from a supplying device;
a radiation source (17) arranged for emitting radiation (R) towards the paths (P) of the multi-path conveyor (3);
a radiation sensor (18) arranged so that it receives the radiation (R) from the radiation source (17), after the radiation (R) penetrated through the multi-path conveyor (3) of rod-like articles (2);
wherein the radiation source (17) and the radiation sensor (18) are situated on opposite sides of a transferring plane (A);
**characterised in that**
multi-path conveyor (3) of the rod-like articles (2) is a single layer multi-path conveyor, and
radiation source (17) is a single point type radiation source,
the radiation sensor (18) is positioned transversely to the paths (P) of the conveyor (3), whereas
the radiation sensor (18) is arranged so that it produces a signal (S) representing attenuation of the radiation (R) penetrating through the rod-like articles (2) on the paths (P) of the multi-path conveyor (3), situated between the radiation source (17) and the radiation sensor (18).

2. Apparatus as in claim 1 **characterised in that** the radiation sensor (18) is a linear sensor or a matrix.

3. Apparatus as in claim 1 or 2 **characterised in that** the multi-path conveyor (3) of rod-like articles (2) is arranged so that it enables transferring groups (G) of rod-like articles (2) in a single plane, parallel to one another.

4. Apparatus as in claim 3 **characterised in that** the multi-path conveyor (3) of rod-like articles (3) is arranged so that all the rod-like articles (2) in a group (G) are aligned to one another.

5. Apparatus as in any of the claims 1 to 4 **characterised in that** the radiation sensor (18) is situated beneath the carrying surface of the multi-path conveyor (3).

6. Apparatus as in any of the claims 1 to 4 **characterised in that** the radiation sensor (18) is situated between the multi-path conveyor (3) and a first hopper (1).

7. Apparatus as in any of the preceding claims **characterised by** being provided with a rotating unit (21) for simultaneous rotation of the rod-like articles (2) in a group (G) at the time of measurement of the parameters of the rod-like articles (2).

8. Apparatus as in any of the preceding claims **characterised in that** the rotating unit (21) is integrated with the first hopper (1).

9. Apparatus as in any of the preceding claims 1 to 8 **characterised in that** the source of radiation (17) is a source of electromagnetic radiation of a frequency in the range between 10¹² and 10¹⁹ Hz.

10. Apparatus as in any of the preceding claims 1 to 9 **characterised in that** the radiation source (17) is arranged so that the intensity of the emitted radiation (R) is adjustable to the speed of the multi-path conveyor (3).

11. Apparatus as in any of the preceding claims 1 to 10 **characterised in that** the radiation sensor (18) is arranged so that the exposure time of the radiation sensor (18) depends on the speed of the multi-path conveyor (3).

12. Apparatus as in any of the preceding claims 1 to 11 **characterised by** being further provided with a processing station (20) which is adapted to collect the signal (S) delivered from the radiation sensor (18) and produce on the basis of the signal (S) an image representing attenuation of the radiation (R) along the length of at least one rod-like article (2).

## Patentansprüche

1. Die Vorrichtung zur Identifizierung physikalischer Parameter von stäbchenförmigen Gegenständen der Tabakindustrie mit
einen Mehrwegförderer (3) aus stabförmigen Gegenständen (2), der mit stabförmigen Gegenständen von einer Zufuhrvorrichtung gespeist wird;
eine Strahlungsquelle (17), die angeordnet ist, um Strahlung (R) in Richtung der Wege (P) des Mehrwegförderers (3) zu emittieren;
einen Strahlungssensor (18), der so angeordnet ist, dass er die Strahlung (R) von der Strahlungsquelle (17) empfängt, nachdem die Strahlung (R) durch den Mehrwegförderer (3) von stabförmigen Gegenständen (2) eingedrungen ist;
worin
befinden sich die Strahlungsquelle (17) und der Strahlungssensor (18) auf gegenüberliegenden Seiten einer Übertragungsebene (A);
ist **dadurch gekennzeichnet, dass**
Mehrwegförderer (3) der stabförmigen Gegenstände (2) ein einschichtiger Mehrwegförderer ist
und
die Strahlungsquelle (17) eine Einzelpunktstrahlungsquelle ist,
der Strahlungssensor (18) ist quer zu den Wegen (P) des Mehrwegförderers (3) positioniert,
wohingegen
ist der Strahlungssensor (18) so angeordnet, dass er ein Signal (S) erzeugt, das die Dämpfung der Strahlung (R) darstellt, die durch die stabförmigen Gegenstände (2) auf den Wegen (P) des Mehrwegförderers (3) zwischen der Strahlungsquelle (17) und dem Strahlungssensor (18) eindringt.

2. Die Vorrichtung nach Anspruch 1 ist **dadurch gekennzeichnet, dass** der Strahlungssensor (18) ein linearer Sensor oder eine Matrix ist.

3. Die Vorrichtung nach Anspruch 1 oder 2 ist **dadurch gekennzeichnet, dass** der Mehrwegförderer (3) von stabförmigen Gegenständen (2) so angeordnet ist, dass er das Übertragen der Gruppen (G) von stabförmigen Gegenständen (2) in einer einzigen Ebene, parallel zueinander, ermöglicht.

4. Die Vorrichtung nach Anspruch 3 ist **dadurch gekennzeichnet, dass** der Mehrwegförderer (3) von stabförmigen Gegenständen (2) so angeordnet ist, dass alle stabförmigen Gegenstände (2) in einer Gruppe (G) zueinander ausgerichtet sind.

5. Die Vorrichtung nach einem der Ansprüche 1 bis 4 ist **dadurch gekennzeichnet, dass** der Strahlungssensor (18) unter der Tragfläche des Mehrwegförderers (3) angeordnet ist.

6. Die Vorrichtung nach einem der Ansprüche 1 bis 4 ist **dadurch gekennzeichnet, dass** der Strahlungssensor (18) zwischen dem Mehrwegförderer (3) und einem ersten Trichter (1) angeordnet ist.

7. Die Vorrichtung wie in einem der vorhergehenden Ansprüche ist **dadurch gekennzeichnet, dass** sie mit einer rotierenden Einheit (21) zum gleichzeitigen Drehen der stabförmigen Gegenstände (2) in einer Gruppe (G) zum Zeitpunkt der Messung von Parametern der stabförmigen Gegenstände (2) gekennzeichnet ist.

8. Die Vorrichtung wie in einem der vorhergehenden Ansprüche ist **dadurch gekennzeichnet, dass** die rotierende Einheit (21) in den ersten Trichter (1) integriert ist.

9. Die Vorrichtung wie in einem der vorhergehenden Ansprüche 1 bis 8 ist **dadurch gekennzeichnet, dass** die Strahlungsquelle (17) eine Quelle elektromagnetischer Strahlung mit einer Frequenz im Bereich zwischen 1012 und 1019 Hz ist.

10. Die Vorrichtung nach einem der vorhergehenden Ansprüche 1 bis 9 ist **dadurch gekennzeichnet, dass** die Strahlungsquelle (17) so angeordnet ist, dass die Intensität der emittierten Strahlung (R) auf die Geschwindigkeit des Mehrwegförderers (3) einstellbar ist.

11. Die Vorrichtung nach einem der vorhergehenden Ansprüche 1 bis 10 ist **dadurch gekennzeichnet, dass** der Strahlungssensor (18) so angeordnet ist, dass die Belichtungszeit des Strahlungssensors (18) von der Geschwindigkeit des Mehrwegförderers (3) abhängt.

12. Die Vorrichtung nach einem der vorhergehenden Ansprüche 1 bis 11 ist **gekennzeichnet dadurch, dass** sie ferner mit einer Verarbeitungsstation (20) versehen ist, die dazu ausgelegt ist, das vom Strahlungssensor (18) gelieferte Signal (S) zu sammeln und auf der Basis des Signals (S) ein Bild, das die Abschwächung der Strahlung (R) entlang der Länge mindestens eines stabförmigen Gegenstands (2) darstellt.

## Revendications

1. Appareil pour l'identification des paramètres physiques des articles en forme de tige de l'industrie du tabac, muni
d'un convoyeur à plusieurs voies (3) pour articles en forme de tige (2), alimenté en articles en forme de tige à partir d'un dispositif d'alimentation ;
d'une source de rayonnement (17) disposée pour émettre un rayonnement (R) en direction des voies (P) du convoyeur à plusieurs voies (3) ;
d'un capteur de rayonnement (18) disposé de manière à recevoir le rayonnement (R) de la source de rayonnement (17), après que le rayonnement (R) ait pénétré à travers le convoyeur à plusieurs voies (3) d'articles en forme de tige (2) ;
dans lequel
la source de rayonnement (17) et le capteur de rayonnement (18) sont situés sur les côtés opposés d'un plan de transfert (A) ;
**caractérisé en ce que**
le convoyeur à plusieurs voies (3) des articles en forme de tige (2) est un convoyeur à plusieurs voies à une seule couche, et
la source de rayonnement (17) est une source de rayonnement de type ponctuel unique,
le capteur de rayonnement (18) est positionné transversalement aux voies (P) du convoyeur (3),
où
le capteur de rayonnement (18) est disposé pour générer un signal (S) représentant l'atténuation du rayonnement (R) pénétrant à travers les articles en forme de tige (2) le long des voies (P) du convoyeur à plusieurs voies (3), situé entre la source de rayonnement (17) et le capteur de rayonnement (18).

2. Appareil selon la revendication 1, **caractérisé en ce que** le capteur de rayonnement (18) est un capteur linéaire ou une matrice.

3. Appareil selon la revendication 1 ou 2, **caractérisé en ce que** le convoyeur à plusieurs voies (3) d'articles en forme de tige (2) est disposé de manière à permettre le transfert de groupes (G) d'articles en forme de tige (2) dans un seul plan, parallèlement les uns aux autres.

4. Appareil selon la revendication 3, **caractérisé en ce que** le convoyeur à plusieurs voies (3) d'articles en forme de tige (2) est disposé de telle sorte que tous les articles en forme de tige (2) d'un groupe (G) sont alignés les uns par rapport aux autres.

5. Appareil comme dans les revendications 1 à 4, **caractérisé en ce que** le capteur de rayonnement (18) est situé sous la surface porteuse du convoyeur à plusieurs voies (3).

6. Appareil comme dans l'une des revendications 1 à 4, **caractérisé en ce que** le capteur de rayonnement (18) est situé entre le convoyeur à plusieurs voies (3) et une première trémie (1).

7. Appareil comme dans l'une des revendications précédentes, **caractérisé en ce qu'**il est muni d'une unité rotative (21) pour la rotation simultanée des articles en forme de tige (2) d'un groupe (G) au moment de la mesure des paramètres des articles en forme de tige (2).

8. Appareil comme dans les revendications précédentes, **caractérisé en ce que** l'unité rotative (21) est intégrée à la première trémie (1).

9. Appareil comme dans l'une des revendications précédentes 1 à 8, **caractérisé en ce que** la source de rayonnement (17) est une source de rayonnement électromagnétique d'une fréquence comprise entre 1012 et 1019 Hz.

10. Appareil comme dans l'une des revendications précédentes 1 à 9, **caractérisé en ce que** la source de rayonnement (17) est disposée de telle sorte que l'intensité du rayonnement émis (R) est réglable à la vitesse du convoyeur à plusieurs voies (3).

11. Appareil comme dans l'une des revendications précédentes 1 à 10, **caractérisé en ce que** le capteur de rayonnement (18) est disposé de telle sorte que la durée d'exposition du capteur de rayonnement (18) dépend de la vitesse du convoyeur à plusieurs voies (3).

12. Appareil comme dans l'une quelconque des revendications précédentes 1 à 11, **caractérisé en ce qu'**il est en outre pourvu d'une station de traitement (20) qui est adaptée pour collecter le signal (S) délivré par le capteur de rayonnement (18) et produire sur la base du signal (S) une image représentant l'atténuation du rayonnement (R) sur la longueur d'au moins un article en forme de tige (2).
